# EUROPEAN PATENT APPLICATION

(11) **EP 1 972 435 A1**
(43) Date of publication of application: **24.09.2008**
(21) Application number: 06828466.0
(22) Date of filing: 29.12.2006
(51) Int. Cl.: B32B 3/12, B32B 3/04, B32B 27/00, A47B 13/08

(54) **A PACKING-TYPE VACUUM-MOULDED COMPOSITE BOARD WELDED BY ULTRASONIC WELDING**

(30) Priority: 30.12.2005 CN 200520126810 U
(71) Applicant: Leng, Luhao, Xiamen, Fujian 361009 (CN)
(72) Inventor: Leng, Luhao, Xiamen, Fujian 361009 (CN)
(74) Representative: Stuttard, Garry Philip
(86) International application number: PCT/CN2006/003654
(87) International publication number: WO 2007/076696

(57) **Abstract**

A packing-type vacuum-forming composite board welded by ultrasonic welding comprises a plastic surface plate (11), a plastic bottom plate (12) and filling materials (13,14) packed between the plastic surface plate (11) and the plastic bottom plate (12). The edge of plastic surface plate (11) overlapps the edge of plastic bottom plate (12), wherein a welding rod (15) made of plastic is arranged along the edge at the overlapped joint region between the plastic surface plate (11) and the plastic bottom plate (12). The welding rod (15) is connected to the plastic surface plate (11) and the plastic bottom plate (12) by ultrasonic welding. The problem that local bonding is not uniform because the whole plane made by vacuum-forming process is not completely melted when the large area of plate welded by ultrasonic welding is solved by arranging the welding rod (15) at the welded joint region between the plastic surface (11) and the plastic bottom plate (12). The composite board can be widely used for furniture such as a surface plate of a table, a separator plate of bookshelf or cabinet, a baffle of bed head or bed foot etc. and for other surface plate required.

## Description

### FIELD OF THE INVENTION

The present invention relates to a vacuum-forming composite board, more particularly to a packing-type vacuum-forming composite board welded by ultrasonic welding.

### BACKGROUND OF THE INVENTION

To save the timber and to protect the ecological environment, the present inventor has invented some arts about plastic composite board and they has been applied for patent of china. One prior art of the plastic composite board comprises a plastic top plate, a plastic bottom plate, A honeycomb paperboard and a inner lining packed between the top plate and the bottom plate. This composite plastic board has some advantages such as light-weight, high-strength, easy-cleaned, lower-cost etc. but the plastic top plate and the plastic bottom plate of this structure usually are large area plane board made by vacuum-forming, they are difficult to meet the technical requirement of ultrasonic welding, the total area can hardly be melted and bonded uniformly by ultrasonic welding, so some regions will not bonded together, thus the bond strength and the stability is not enough.

### SUMMARY OF THE INVENTION

The primary object of the present invention is to obviate the disadvantages and limitations of the prior art, the present invention provides a packing-type vacuum-forming composite board welded by ultrasonic welding. Through a welding rod arranged in the ultrasonic welding regions between the plastic surface plate and the plastic bottom plate of the vacuum-forming composite board, the plastic surface plate and the plastic bottom plate will meet the technical requirement of ultrasonic welding, thus the welding strength between the plastic surface plate and the plastic bottom plate could be enough.

The above and other objects of the invention are achieved by providing a packing-type vacuum-forming composite board welded by ultrasonic welding comprises a plastic surface plate, a plastic bottom plate and filling materials packed between the plastic surface plate and the plastic bottom plate; The edge of plastic surface plate is overlapped over the edge of plastic bottom plate, wherein a welding rod made of plastic is arranged along the edge at the overlapped joint region between the plastic surface plate and the plastic bottom plate. The welding rod is connected to the plastic surface plate and the plastic bottom plate by ultrasonic welding.

Said welding rod is a single structure surrounded continuously around the outer edge of the plastic bottom plate.

Said welding rod is a multi-single structure surrounded discontinuously around the outer edge of the plastic bottom plate.

The cross section of said welding rod is a round or an ellipse.

The cross section of said welding rod is a triangle or a square or a rectangle.

The cross section of said welding rod is a regular polygon or an irregular polygon.

Said filling material is honeycomb paperboard or foam board and inner lining for connection or strengthening.

Said plastic surface plate and/or plastic bottom plate is made of single layer or multi-layer plastic extrusion plate directly; or

Single layer or multi-layer plastic extrusion plate through vacuum-forming.

Another art of the present invention is that: a packing-type vacuum-forming composite board welded by ultrasonic welding comprises a plastic surface plate, a plastic bottom plate and filling materials packed between the plastic surface plate and the plastic bottom plate, plastic boundary sealed in the interstice between the edge of the plastic surface plate and the edge of the plastic bottom plate; the plastic boundary has a first side overlapped the plastic surface plate and a second side overlapped the plastic bottom plate; the said first side and second side at least have a welding rib or some welding embosses along the lengthwise; the welding rib or the welding embosses of the first side combined together with the edge of the plastic surface board by ultrasonic welding, the welding rib or the welding embosses of the second side combined together with the edge of the plastic bottom board by ultrasonic welding.

Said plastic boundary is a single structure surrounded continuously around the outer edge of the plastic bottom plate.

Said plastic boundary is a multi-single structure surrounded discontinuously around the outer edge of the plastic bottom plate.

Said plastic boundary is extrusion plastic part or injection plastic part, or composite part comprising extrusion plastic part and injection plastic part.

Said filling material is honeycomb paperboard or foam board and inner lining for connection or strengthening.

Said plastic surface plate and/or plastic bottom plate is made of single layer or multi-layer plastic extrusion plate directly; or

Single layer or multi-layer plastic extrusion plate through vacuum-forming.

The plastic surface plate and plastic bottom plate of the present invention is made by screw extruder directly to the need plate, or let the plastic extrusion plate machined by means of vacuum-forming to the need shape and size, the shape can be rectangle or square, or be round or ellipse, or be triangle or polygon or irregular polygon. It can make different color or pattern on the surface plate or bottom plate according to different product.

The inner lining of the present invention can be pipe fittings or extrusion profiles, or can be injection parts or metal castings to enhance the strength of the edge of the vacuum-forming composite board, and it can arrange some reinforcing ribs or embed some reinforcing pipe fittings on the plastic plate if there are needs.

The welding rod of the present invention is made of plastic materials, the welding rod can be a single rod arranged in the ultrasonic welding regions between the plastic surface plate and the plastic bottom plate, this arrangement suit the making process of round vacuum-forming composite board; the welding rod also can be a multi-single rods surrounded discontinuously around in the ultrasonic welding regions between the plastic surface plate and the plastic bottom plate, this arrangement suit the making process of rectangle vacuum-forming composite board. The cross section of the welding rod can be round or ellipse, or can be triangle or square or rectangle, also can be regular polygon or irregular polygon.

The plastic boundary of the present invention used in the condition that if the plastic surface plate and the plastic bottom plate do not overlap, then the plastic boundary can be used to connect the plastic surface plate to the plastic bottom plate.

The ultrasonic welding position of the plastic surface plate and the plastic bottom plate of the present invention can arranged in the underside of the sides of the plates or in the middle of the sides.

Ultrasonic welding is to induce the mechanical vibrations produced by the ultrasonic welding machine to the plastic surface plate, the plastic bottom plate, welding rod or plastic boundary, the friction of the molecules of the plastic surface plate, the plastic bottom plate, welding rod or plastic boundary will rise the temperature of the welding joint regions, when the temperature reach the melting point of the plastic, the welding ribs of the welding rod or plastic boundary will be melted quickly, and then adhere between the plastic surface plate and the plastic bottom plate, when the vibration stopped, the plastic surface plate, the plastic bottom plate, and the plastic boundary will be cool-formed at the same time under certain pressure, thus the plastic surface plate will be melted together with the plastic bottom plate directly, or the plastic surface plate will be melted together with the plastic bottom plate through the plastic boundary. This arrangement that set melting rods into the melting regions between the plastic surface plate and the plastic bottom plate, or set melting ribs or some melting embosses in the melting regions between the plastic boundary and the plastic surface plate or the plastic bottom plate, make the melting rod, or the melting ribs or the melting embosses of the plastic boundary can be melted so as to bond the surface plate and the plastic bottom plate together with each other when melted, which assure the melting strength between the surface plate and the plastic bottom plate and the stability of the vacuum-forming composite board.

The present invention has advantages as follows: by arranging the welding rod being made of the plastic materials at the welded joint region between the plastic surface and the plastic bottom plate, the melting rod melted to bond the plastic surface plate together with the plastic bottom plate by the means of ultrasonic melting, this solve the problem that local bonding is not uniform because the whole plane made by vacuum-forming process is not completely melted when the large area of plate welded by ultrasonic welding, the melting rod used to melt between the plastic plate and the plastic bottom plate will markedly strengthen the bonding force between them, and make the bonding more stable; another art is to set melting ribs or some melting embosses on the boundary which have the same effect of the melting rod, the melting ribs and the melting embosses of the plastic boundary will be melted between the plastic surface plate and the plastic boundary, or between the plastic bottom plate and the plastic boundary, thus the plastic surface plate will bond together with the plastic bottom plate by the plastic boundary, which will markedly strengthen the bonding force between them, and make the bonding more stable. Both the two structures aforementioned can be used to meet the technical requirement of the ultrasonic melting between the plastic surface plate and the plastic bottom plate, which assure the melting strength and the stability between the surface plate and the plastic bottom plate.

### BFIEF DESCRIPTION OF THE DRAWINGS

Preferred embodiment of the present invention will be described in detail with reference to the drawings and examples; Understanding that these drawings depict only typical embodiments of the invention and are not therefore to be considered to be limiting of its scope.
FIG. 1 is a structure view of embodiment 1 of the present invention;
FIG. 2 is a structure view of embodiment 2 of the present invention;
FIG. 3 is a structure view of embodiment 3 of the present invention;
FIG. 4 is a structure view of embodiment 4 of the present invention;
FIG. 5 is a structure view of embodiment 5 of the present invention;
FIG. 6 is a structure view of embodiment 6 of the present invention;
FIG. 7 is a structure view of embodiment 7 of the present invention;
FIG. 8 is a structure view of embodiment 8 of the present invention;
FIG. 9 is a structure view of embodiment 9 of the present invention;
FIG. 10 is a structure view of embodiment 10 of the present invention;
FIG. 11 is a structure view of embodiment 11 of the present invention;
FIG. 12 is a structure view of embodiment 12 of the present invention;
FIG. 13 is a structure view of embodiment 13 of the present invention;

### DETAILED DESCRIPTION OF THE PREFFED EMBODIMENT

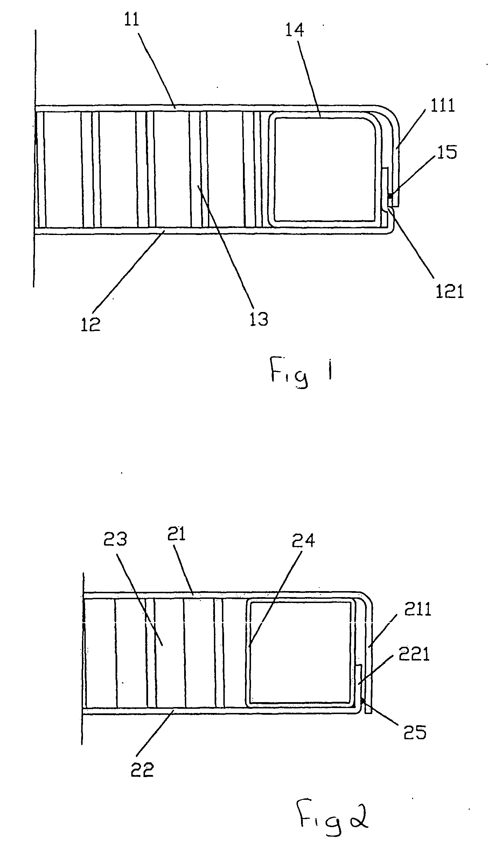

Embodiment 1. Referring to FIG. 1, the packing-type vacuum-forming composite board welded by ultrasonic welding of the present invention comprises a plastic surface plate 11, a plastic bottom plate 12, a honeycomb paperboard 13, an inner lining 14, welding rod 15, in this embodiment the filling materials are using the honeycomb paperboard 13 and the inner lining 14, certainly, it also can use the plastic foam board and the inner lining. The edge of the plastic surface plate 11 bended upwards to form a bending part 121, the space covered by the plastic surface plate 11 and the plastic bottom plate 12 is filled by the honeycomb paperboard 13 and inner lining 14, wherein the honeycomb paperboard 13 is in the middle part and the inner lining 14 is in the edge part, the inner lining 14 can be surrounding the honeycomb paperboard 13 when it is need to make a round vacuum-forming composite board; or can be mounted to both sides of the honeycomb paperboard 13 when it is need to make a rectangle or square vacuum-forming composite board; the edge of plastic surface plate 11 overlap the edge of plastic bottom plate 12, i. e. the bending part 111 of plastic surface plate 11 is leaning against the bending part 121 of plastic bottom plate 12; welding rod 15 arranged in the overlapped joint region between the plastic surface plate 11 and the plastic bottom plate 12, and surrounding the edge of the two plates, i. e. the welding rod 15 arranged between the bending part 111 of plastic surface plate 11 and the bending part 121 of plastic bottom plate 12, the welding rod 15 is made of plastic material, and its cross section is round; the welding rod 15 is connected to the plastic surface plate 11 and the plastic bottom plate 12 by ultrasonic welding.

The plastic surface plate 11 and plastic bottom plate 12 is made by screw extruder directly to be the need plate, then machined by means of vacuum-forming to the need shape and size, the shape can be rectangle or square, or be round or ellipse, or be triangle or polygon or irregular polygon. The plastic surface plate and plastic bottom plate can also be made by plastic extrusion plate directly; The plastic surface plate and plastic bottom plate can be single layer or multi-layer, i. e. use the material such as ABS, PP, PS to make a single layer or use PMMA+PS, PC+PS to make a multi-layer. The surfaces of the surface plate and bottom plate can has printing textures or printing patterns, or has composite film layer containing textures or patterns, e.g. the corresponding surfaces of the surface plate and bottom plate can produce various nature colors such as wood grains or marbles by means of printing, they also can has composite film layer containing nature colors such as wood grains or marbles to form a strong texture change character; the corresponding surface of the plates can also has transfer films with natural colors such as various wood grains or marbles, after transferring, the film is removed, then spray heat curing or UV-curing materials to form a layer to add the rigidity and weatherability of the table surface.

The plastic surface plate and bottom plate are composed together after being machined respectively, so the plastic surface plate and bottom plate can use the same color, e. g. French gray; or use different colors, e. g. the surface plate used French gray and the bottom plate used green, or the surface plate used beige and the bottom plate blue, etc. ; it form a variety of the colors, thus strengthen the aesthetic effect.

The inner lining 14 can be pipe fittings or extrusion profiles, or can be injection parts or metal castings to enhance the strength of the edge of the vacuum-forming composite plate.

The welding rod 15 is made of plastic materials, the welding rod 15 can be a single rod arranged in the ultrasonic welding regions between the plastic surface plate 11 and the plastic bottom plate 12, this arrangement suit the making process of round vacuum-forming composite plate; the welding rod 15 also can be a multi-single rods surrounded discontinuously in the ultrasonic welding regions between the plastic surface plate 11 and the plastic bottom plate 12, this arrangement suit the making process of rectangle vacuum-forming composite plate.

The ultrasonic welding region of the plastic surface plate 11 and the plastic bottom plate 12 arranged below the middle of the side faces of the plates.

Ultrasonic welding is to let the mechanical vibrations of the ultrasonic welding machine induced to the plastic surface plate 11, the plastic bottom plate 12 and welding rod 15, the friction of the molecules of the plastic surface plate 11, the plastic bottom plate 12 and welding rod 15 will rise temperature of the welding region, when the temperature reach the melting point of the plastic, the welding rod 15 will be melted quickly, and then adhere between the plastic surface plate 11 and the plastic bottom plate 12, when the vibration stopped, the plastic surface plate 11, the plastic bottom plate 12 will be cool-formed at the same time under certain pressure, thus the plastic surface plate 11 will be melted together with the plastic bottom plate 12. This arrangement that set melting rods 15 into the melting region which is between the plastic surface plate 11 and the plastic bottom plate 12, make the melting rod can be melted so as to bond the surface plate 11 and the plastic bottom plate 12 together with each other when the rod melted, which assure the melting strength between the surface plate 11 and the plastic bottom plate 12 and the stability of the vacuum-forming composite board.

Embodiment 2. Referring to FIG. 2, the packing-type vacuum-forming composite board welded by ultrasonic welding of the present invention comprises a plastic surface plate 21, a plastic bottom plate 22, a honeycomb paperboard 23, an inner lining 24, welding rod 25, the edge of the plastic surface plate 21 bended downwards to form a bending part 211, the edge of the plastic bottom plate 22 bended upwards to form a bending part 221, the difference of this embodiment to embodiment 1 is that the cross section of the welding rod 25 is triangle, the welding rod 25 connected to the plastic surface plate 21 and the plastic bottom plate 22 by means of ultrasonic welding.

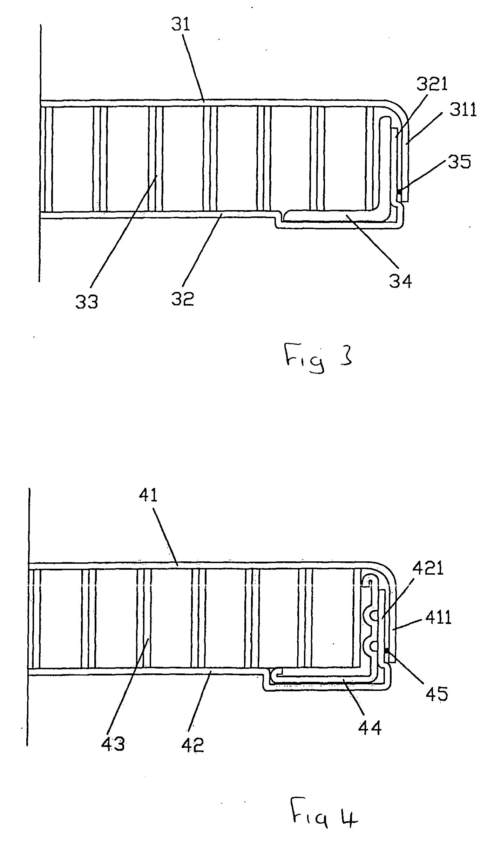

Embodiment 3. Referring to FIG. 3, the packing-type vacuum-forming composite board welded by ultrasonic welding of the present invention comprises a plastic surface plate 31, a plastic bottom plate 32, a honeycomb paperboard 33, an inner lining 34, welding rod 35, the edge of the plastic surface plate 31 bended downwards to form a bending part 311, the edge of the plastic bottom plate 32 bended upwards to form a bending part 321, the welding rod 35 connected to the plastic surface plate 31 and the plastic bottom plate 32 by means of ultrasonic welding. The difference of this embodiment to embodiment 1 is that the inner lining 34 is L-shaped, so one side of the L of inner lining 34 can be underlay the edge of honeycomb paperboard 33.

Embodiment 4. Referring to FIG. 4, the packing-type vacuum-forming composite board welded by ultrasonic welding of the present invention comprises a plastic surface plate 41, a plastic bottom plate 42, a honeycomb paperboard 43, an inner lining 44, welding rod 45, the edge of the plastic surface plate 41 bended downwards to form a bending part 411, the edge of the plastic bottom plate 42 bended upwards to form a bending part 421, the welding rod 45 connected to the plastic surface plate 41 and the plastic bottom plate 42 by means of ultrasonic welding. The difference of this embodiment to embodiment 3 is that the inner lining 44 is L-shaped with hook and bending parts, the hook and the bending parts can add the strength of the inner lining 44.

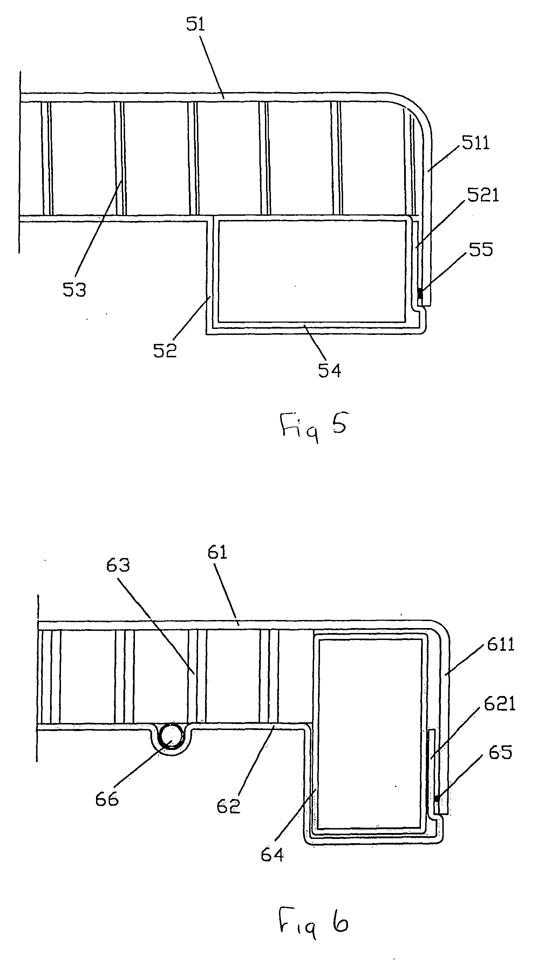

Embodiment 5. Referring to FIG. 5, the packing-type vacuum-forming composite board welded by ultrasonic welding of the present invention comprises a plastic surface plate 51, a plastic bottom plate 52, a honeycomb paperboard 53, an inner lining 54, welding rod 55, the edge of the plastic surface plate 51 bended downwards to form a bending part 511, the edge of the plastic bottom plate 42 first bended downwards, then bended upwards to form a protruding part which is downwards, herein the bended upwards is bending part 521, the inner lining 54 underlay the edge of honeycomb paperboard 53, the welding rod 55 connected to the plastic surface plate 51 and the plastic bottom plate 52 by means of ultrasonic welding. The cross section of the welding rod 55 is rectangle.

Embodiment 6. Referring to FIG. 6, the packing-type vacuum-forming composite board welded by ultrasonic welding of the present invention comprises a plastic surface plate 61, a plastic bottom plate 62, a honeycomb paperboard 63, an inner lining 64, welding rod 65 and a pipe fittings 66, the edge of the plastic surface plate 61 bended downwards to form a bending part 611, the edge of the plastic bottom plate 62 first bended downwards, then bended upwards to form a protruding part which is downwards, herein the bended upwards is bending part 621, the inner lining 64 covers the edge of honeycomb paperboard 63, the pipe fittings 66 mounted between the honeycomb paperboard 63 and the plastic bottom plate 62, the welding rod 65 connected to the plastic surface plate 61 and the plastic bottom plate 62 by means of ultrasonic welding. The cross section of the welding rod 55 is regular hexagon.

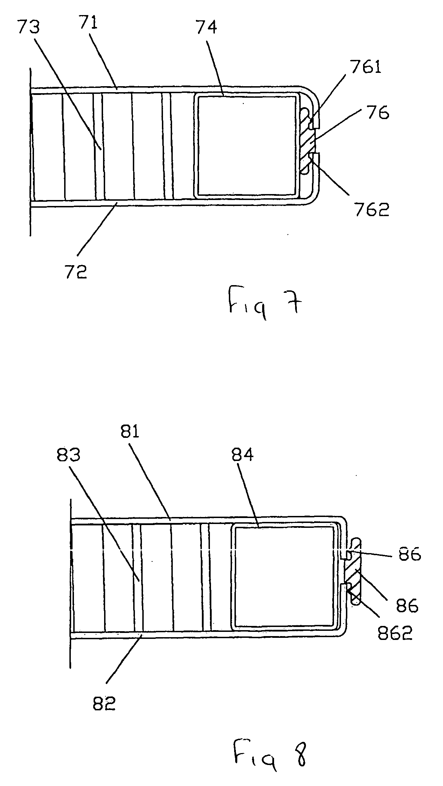

Embodiment 7. Referring to FIG. 7, the packing-type vacuum-forming composite board welded by ultrasonic welding of the present invention comprises a plastic surface plate 71, a plastic bottom plate 72, a honeycomb paperboard 73 and an inner lining 74 packed in the space between the plastic surface plate 71 and the plastic bottom plate 72, a plastic boundary 76 sealed in the interstice between the edge of plastic surface plate 71 and the edge of plastic bottom plate 72; the plastic boundary 76 has a first side overlapping the plastic surface plate and a second side overlapping the plastic bottom plate; the first side has a welding rib 761 along the lengthwise, the second side has a welding rib 762 along the lengthwise; the welding rib 761 of the first side bonded together with the edge of the plastic surface plate 71 by means of ultrasonic welding, the welding rib 762 of the second side bonded together with the edge of the plastic bottom plate 72 by ultrasonic welding.

The plastic boundary 76 is a single structure surrounded continuously around the interstice between the edge of the plastic surface plate and bottom plate, or is a multi-single structure surrounded discontinuously around the interstice between the edge of the plastic surface plate and bottom plate. The plastic boundary 76 is an extrusion plastic part or an injection plastic part, or a composite part comprising of extrusion plastic part and injection plastic part.

Ultrasonic welding is to let the mechanical vibrations of the ultrasonic welding machine induced to the plastic surface plate 71, the plastic bottom plate 72 and plastic boundary 76, the friction of the molecules of the plastic surface plate 71, the plastic bottom plate 72 and plastic boundary 76 will rise temperature of the welding regions, when the temperature reach the melting point of the plastic, the welding ribs 761, 762 will be melted quickly in the joint regions, and then bonded to the plastic surface plate 71 and the plastic bottom plate 72 respectively, when the vibration stopped, the plastic surface plate 71, the plastic bottom plate 72, and the plastic boundary 76 will be cool-formed at the same time under certain pressure, thus the plastic surface plate 71 will be melted together with the plastic bottom plate 72 via the plastic boundary 76. This arrangement that set melting ribs 761, 762 into the melting region which is between the plastic boundary 76 and the plastic surface plate 71, the plastic bottom plate 72, make the melting ribs 761, 762 of the plastic boundary can be melted so as to bond the surface plate 71 and the plastic bottom plate 72 respectively, which assure the melting strength between the surface plate 71 and the plastic bottom plate 72 and the stability of the vacuum-forming composite board.

Embodiment 8. Referring to FIG. 8, the packing-type vacuum-forming composite board welded by ultrasonic welding of the present invention comprises a plastic surface plate 81, a plastic bottom plate 82, a honeycomb paperboard 83 and an inner lining 84 packed in the space between the plastic surface plate 81 and the plastic bottom plate 82, a plastic boundary 86 sealed in the interstice between the edge of plastic surface plate 81 and the edge of plastic bottom plate 82; the plastic boundary 86 has a first side overlapping the plastic surface plate and a second side overlapping the plastic bottom plate; the first side has a welding rib 861 along the lengthwise, the second side has a welding rib 862 along the lengthwise; the difference of this embodiment to embodiment 7 is that the plastic boundary 86 is mounted in the outer side of the interstice between the edge of plastic surface plate and the edge of plastic bottom plate.

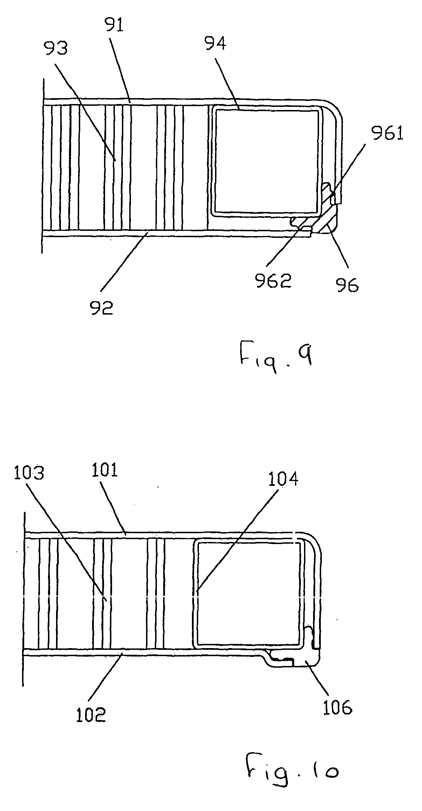

Embodiment 9. Referring to FIG.9, the packing-type vacuum-forming composite board welded by ultrasonic welding of the present invention comprises a plastic surface plate 91, a plastic bottom plate 92, a honeycomb paperboard 93 and an inner lining 94 packed in the space between the plastic surface plate 91 and the plastic bottom plate 92, a plastic boundary 96 sealed in the interstice between the edge of plastic surface plate 91 and the edge of plastic bottom plate 92; the plastic boundary 96 has a first side overlapping the plastic surface plate and a second side overlapping the plastic bottom plate; the first side has a welding rib 961 along the lengthwise, the second side has a welding rib 962 along the lengthwise; the difference of this embodiment to embodiment 7 is that the interstice between the edge of plastic surface plate and the edge of plastic bottom plate is set in underside of the side-face of the plates.

Embodiment 10. Referring to FIG. 10, the packing-type vacuum-forming omposite board welded by ultrasonic welding of the present invention comprises a plastic surface plate 101, a plastic bottom plate 102, a honeycomb paperboard 103 and a inner lining 104 packed in the space between the plastic surface plate 101 and the plastic bottom plate 102, a plastic boundary 106 sealed in the interstice between the edge of plastic surface plate 101 and the edge of plastic bottom plate 102; the difference of this embodiment to embodiment 9 is that the honeycomb paperboard 103 and the inner lining 104 are adhere on the plastic bottom plate.

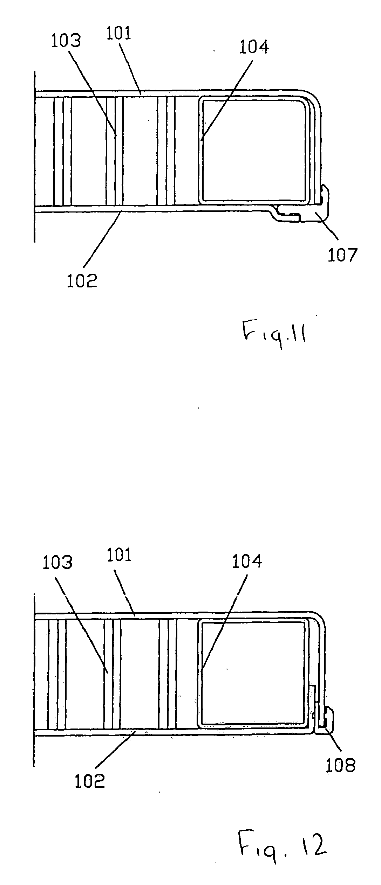

Embodiment 11. Referring to FIG. 11, the packing-type vacuum-forming omposite board welded by ultrasonic welding of the present invention comprises a plastic surface plate 101, a plastic bottom plate 102, a honeycomb paperboard 103 and an inner lining 104 packed in the space between the plastic surface plate 101 and the plastic bottom plate 102, a plastic boundary 107 sealed in the interstice between the edge of plastic surface plate 101 and the edge of plastic bottom plate 102; the difference of this embodiment to embodiment 10 is that the ultrasonic welding regions set in the overlapped position of one side of the plastic boundary 107 and the outer side of the plastic surface plate 101, and the other regions set in the overlapped position of another side of the plastic boundary 107 and the inner side of plastic surface plate 101 .

Embodiment 12. Referring to FIG. 12, the packing-type vacuum-forming omposite board welded by ultrasonic welding of the present invention comprises a plastic surface plate 101, a plastic bottom plate 102, a honeycomb paperboard 103 and a inner lining 104 packed in the space between the plastic surface plate 101 and the plastic bottom plate 102, a plastic boundary 108 sealed in the interstice between the edge of plastic surface plate 101 and the edge of plastic bottom plate 102; the difference of this embodiment to embodiment 10 is that the plastic boundary 108 is U-shaped, the opening of the U-shape inserted the edge of plastic surface plate 101, the ultrasonic welding regions set in the overlapped position of one side of the plastic boundary 107 and the outer side of the plastic surface plate 101, and the other regions set in the overlapped position of another side of the plastic boundary 107 and the outer side of plastic surface plate 101.

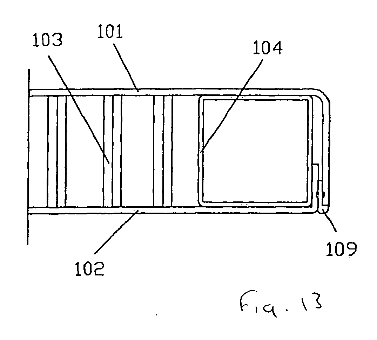

Embodiment 13. Referring to FIG. 13, the packing-type vacuum-forming omposite board welded by ultrasonic welding of the present invention comprises a plastic surface plate 101, a plastic bottom plate 102, a honeycomb paperboard 103 and a inner lining 104 packed in the space between the plastic surface plate 101 and the plastic bottom plate 102, a plastic boundary 109 sealed in the interstice between the edge of plastic surface plate 101 and the edge of plastic bottom plate 102; the difference of this embodiment to embodiment 10 is that the plastic boundary 109 is L-shaped, one side of U-shape inserted between the edge of plastic surface plate and the edge of plastic bottom plate, the ultrasonic welding regions set in the overlapped position of the first side of the plastic boundary 109 and the inner side of the plastic surface plate 101, and the other regions set in the overlapped position of the second side of the plastic boundary 109 and the outer side of the plastic surface plate 101.

The composite board of the present invention can be widely used for furniture such as surface plates of tables, seat board or backrest of chairs, separator plates of bookshelf or cabinet, baffle board of bed head or bed foot etc. and for other surface plate required e.g. boards used in construction.

The above-mentioned descriptions are of exemplary embodiments only, and are not intended to limit the scope, applicability or configuration of the invention in any way. All changes that come within the meaning and range of equivalency of the claims are to be embraced within their scope.

### INDUSTRY UTILITY

The packing-type vacuum-forming composite board welded by ultrasonic welding by ultrasonic welding provided in the present invention has simple structure, the plastic surface plate and the plastic bottom plate is welded by means of ultrasonic welding via a welding rod, so the bonding strength is strong and stable, and the board has well industry utility.

## Claims

1. A packing-type vacuum-forming composite board welded by ultrasonic welding comprises a plastic surface plate, a plastic bottom plate and filling materials packed between the plastic surface plate and the plastic bottom plate, wherein the edge of plastic surface plate overlap the edge of plastic bottom plate, a welding rod made of plastic is arranged along the edge at the overlapped joint region between the plastic surface plate and the plastic bottom plate, said welding rod is connected to the plastic surface plate and the plastic bottom plate by ultrasonic welding.

2. The packing-type vacuum-forming composite board welded by ultrasonic welding according to claim 1, wherein said welding rod is a single structure surrounded continuously around the outer edge of the plastic bottom plate, or
Said welding rod is a multi-single structure surrounded discontinuously around the outer edge of the plastic bottom plate.

3. The packing-type vacuum-forming composite board welded by ultrasonic welding according to claim 1, wherein the cross section of said welding rod is a round or an ellipse or a square or a rectangle or a regular polygon or an irregular polygon.

4. The packing-type vacuum-forming composite board welded by ultrasonic welding according to claim 1, wherein said filling material is honeycomb paperboard or foam board and inner lining for connection or strengthening.

5. The packing-type vacuum-forming composite board welded by ultrasonic welding according to claim 1, wherein said plastic surface plate and/or plastic bottom plate is made of single layer or multi-layer plastic extrusion plate directly; or
Single layer or multi-layer plastic extrusion plate through vacuum-forming.

6. A packing-type vacuum-forming composite board welded by ultrasonic welding comprises a plastic surface plate, a plastic bottom plate and filling materials packed between the plastic surface plate and the plastic bottom plate, plastic boundary sealed in the interstice between the edge of the plastic surface plate and the edge of the plastic bottom plate; the plastic boundary has a first side overlapped the plastic surface plate and a second side overlapped the plastic bottom plate; wherein the said first side and second side at least have a welding rib or some welding embosses along the lengthwise; the welding rib or the welding embosses of the first side combined together with the edge of the plastic surface board by ultrasonic welding, the welding rib or the welding embosses of the second side combined together with the edge of the plastic bottom board by ultrasonic welding.

7. The packing-type vacuum-forming composite board welded by ultrasonic welding according to claim 6, wherein said plastic boundary is a single structure surrounded continuously around the outer edge of the plastic bottom plate, or
A multi-single structure surrounded discontinuously around the outer edge of the plastic bottom plate.

8. The packing-type vacuum-forming composite board welded by ultrasonic welding according to claim 6, wherein said plastic boundary is.extrusion plastic part or injection plastic part, or composite part comprising extrusion plastic part and injection plastic part.

9. The packing-type vacuum-forming composite board welded by ultrasonic welding according to claim 6, wherein said filling material is honeycomb paperboard or foam board and inner lining for connection or strengthening.

10. The packing-type vacuum-forming composite board welded by ultrasonic welding according to claim 6, wherein said plastic surface plate and/or plastic bottom plate is made of single layer or multi-layer plastic extrusion plate directly, or
Single layer or multi-layer plastic extrusion plate made by vacuum-forming.
